# EUROPÄISCHE PATENTSCHRIFT

(11) **EP 3 538 301 B1**
(45) Veröffentlichungstag und Bekanntmachung des Hinweises auf die Patenterteilung: **04.08.2021**
(21) Anmeldenummer: 17804094.5
(22) Anmeldetag: 07.11.2017
(51) Int. Cl.: B22F 10/28, B33Y 30/00, B29C 64/153, B22F 7/08, B29C 64/106, H01F 5/02, B22F 7/00, B22F 12/41, B22F 12/53, B33Y 70/10, B22F 12/45, B22F 1/00

(54) **3D-DRUCKVERVORRICHTUNG UND 3D-DRUCKVERFAHREN**
3D PRINTING DEVICE AND 3D PRINTING METHOD
DISPOSITIF D'IMPRESSION 3D ET PROCÉDÉ D'IMPRESSION 3D

(30) Priorität: 08.11.2016 DE 102016221889
(43) Veröffentlichungstag der Anmeldung: 18.09.2019
(73) Patentinhaber: Brose Fahrzeugteile SE & Co. Kommanditgesellschaft, Würzburg, 97076 Würzburg (DE)
(72) Erfinder: BEETZ, Stefan, 19089 Barnin (DE)
(74) Vertreter: Maikowski & Ninnemann Patentanwälte Partnerschaft mbB
(86) Internationale Anmeldenummer: PCT/EP2017/078419
(87) Internationale Veröffentlichungsnummer: WO 2018/087067

(56) Entgegenhaltungen:
- WO-A1-2009/073498
- WO-A1-2014/116254
- WO-A1-2016/148343
- WO-A1-2016/149301
- DE-A1-102012 107 297
- JP-A- 2015 217 682
- US-A1- 2015 108 695
- US-A1- 2015 244 214

## Beschreibung

Die Erfindung betrifft eine 3D-Druckvorrichtung zur Herstellung eines dreidimensionalen Bauteils sowie ein 3D-Druckverfahren.

Beim 3D-Druck werden dreidimensionale Bauteile üblicherweise schichtweise aus einem oder mehreren Materialien aufgebaut. Als Materialien kommen hierbei beispielsweise Kunststoffe, Harze, Keramiken und Metalle zum Einsatz. In diesem Zusammenhang ist bekannt, dreidimensionale Bauteile durch selektives Lasersintern (für thermoplastische Kunststoffe), durch selektives Laserschmelzen (für Metalle) oder selektives Elektronenstrahlschmelzen (für Metalle) herzustellen. In diesen Verfahren, bei denen Material lokal geschmolzen wird, um das jeweilige dreidimensionale Bauteil zu erzeugen, kommt nur ein Material zum Einsatz.

Des Weiteren sind die Inkjet-ähnliche 3D-Druckverfahren bekannt, bei denen unterschiedliche, jeweils pulverförmig oder flüssig vorliegende Materialien in Analogie zu einem Tintenstrahldrucker schichtweise aufgesprüht werden. Üblicherweise werden hierbei Kunststoffmaterialien eingesetzt, die dann zumeist unter UV-Licht aushärten.

Eine Lösung gemäß dem Oberbegriff des Anspruchs 1 ist ferner aus der US 2015/0108695 A1 bekannt.

Ausgehend von diesem Stand der Technik liegt der Erfindung die Aufgabe zugrunde, eine verbesserte Lösung für den 3D-Druck eines dreidimensionalen Bauteils, insbesondere eines Stators für einen Elektromotor bereitzustellen.

Diese Aufgabe wird sowohl mit einer 3D-Druckvorrichtung des Anspruchs 1 als auch einem 3D-Druckverfahren des Anspruchs 7 gelöst.

Grundgedanke der Erfindung ist hierbei eine Kombination einer Sprühdruckeinheit zum Aufsprühen von unterschiedlichen Materialien mit einer Elektronenstrahl- und/oder Lasereinheit zum wenigstens lokalen Schmelzen aufgesprühten Materials, um dieses stoffschlüssig zu verbinden. Das mittels eines Elektronenstrahls oder mittels eines Laserstrahls zu verbindende Material wird hier somit zuvor durch eine Sprühdruckeinheit nach Art eines Tintenstrahldrucken tropfenförmig (feucht oder trocken, je nachdem, ob das Material z.B. flüssig oder pulverförmig vorgehalten wird) aufgesprüht. Hierbei kann beispielsweise mit einer 3D-Druckvorrichtung zusätzlich zu einem Aufsprühen vernetzbaren Kunststoffmaterials die Erzeugung einer Schmelze für die stoffschlüssige Verbindung bestimmter Abschnitte des herzustellenden dreidimensionalen Bauteils - gegebenenfalls aus einem anderen aufgesprühten Material - realisiert werden. Derart lassen sich auch hochkomplexe Bauteile mit unterschiedlichen Materialanforderungen in einem 3D-Druckvorgang aus unterschiedlichen Materialen erzeugen.

Eine erfindungsgemäße 3D-Druckvorrichtung zur Herstellung respektive zum Drucken eines dreidimensionalen Bauteils aus mindestens zwei unterschiedlichen Materialien weist dementsprechend sowohl eine Sprühdruckeinheit als auch eine Elektronenstrahl- und/oder Lasereinheit auf. Zur Herstellung des dreidimensionalen Bauteils ist die Sprühdruckeinheit zum Aufsprühen der mindestens zwei unterschiedlichen Materialien eingerichtet und vorgesehen und die Elektronenstrahl- und/oder Lasereinheit ist ferner eingerichtet und vorgesehen, aufgesprühtes Material durch Schmelzen mittels eines Elektronenstrahls und/oder mittels eines Laserstrahls der Elektronenstrahl- und/oder Lasereinheit stoffschlüssig zu verbinden. Bei dem durch die Elektronenstrahl- und/oder Lasereinheit zu schmelzenden, aufgesprühten Material kann es sich um genau eines der mehreren unterschiedlichen aufgesprühten Materialien oder auch um eine Mischung aus mindestens zwei unterschiedlichen Materialien handeln. Erfindungsgemäß ist die 3D-Druckvorrichtung jedenfalls eingerichtet, in einem Arbeitsgang ein erstes Material mittels der Sprühdruckeinheit als Metallpulver und ein zweites Material als in flüssiger Form vorliegendes Kunststoffmaterial aufzusprühen und in einem zweiten Arbeitsgang aufgesprühtes erstes Material selektiv und wenigstens lokal aufzuschmelzen.

Die 3D-Druckvorrichtung, die eine Sprühdruckeinheit und eine Elektronenstrahl- und/oder Lasereinheit integriert, weist in einer Ausführungsvariante eine Bauteilplattform für das herzustellende dreidimensionale Bauteil auf, oberhalb derer sowohl die Elektronenstrahl- und/oder Lasereinheit als auch ein Druckkopf der Sprühdruckeinheit positionierbar sind. Die Struktur des zu druckenden dreidimensionalen Bauteils ist somit in der 3D-Druckvorrichtung unter Nutzung sowohl der Sprühdruckeinheit als auch der Elektronenstrahl- und/oder Lasereinheit herstellbar, ohne einen Teil des Bauteils oder einen Rohling für das herzustellende Bauteil von der Bauteilplattform zu entfernen.

In diesem Zusammenhang sieht eine 3D-Druckvorrichtung in einer Variante beispielsweise vor, dass die Elektronenstrahl- und/oder Lasereinheit und/oder der Druckkopf entlang wenigstens zweier im Wesentlichen senkrecht zueinander verlaufender, erster und zweiter Raumrichtungen relativ zu der Bauteilplattform verstellbar sind. Die Elektronenstrahl- und/oder Lasereinheit und der Druckkopf können hierbei beispielsweise an zwei unterschiedlichen Verstelleinrichtungen oder an einer gemeinsamen Verstelleinrichtung eines Verstellsystems angeordnet sein, die eine fremdkraftbetätigte Verstellung der beiden Einheiten in einer durch die beiden ersten und zweiten Raumrichtungen aufgespannten Ebene gestatten. Für eine kompakte Bauform kann sich ein Verstellsystem anbieten, bei dem die Elektronenstrahl- und/oder Lasereinheit und der Druckkopf der Sprühdruckeinheit beispielsweise pneumatisch, hydraulisch und/oder elektromotorisch stufenlos oberhalb der Bauteilplattform in einer XY-Ebene eines XYZ-Koordinatensystems verstellbar sind.

Die Elektronenstrahl- und/oder Lasereinheit und/oder der Druckkopf können ferner entlang einer dritten Raumrichtung, die im Wesentlichen senkrecht zu den ersten und zweiten Raumrichtungen verläuft, relativ zu der Bauteilplattform verstellbar sein, um insbesondere das Auftragen respektive Aufsprühen der einzelnen Materialschichten auch in einer Höhe, entlang der dritten Raumrichtung, anpassen zu können. Alternativ oder ergänzend kann hierfür selbstverständlich die Bauteilplattform entlang einer dritten Raumrichtung relativ zu der Elektronenstrahl- und/oder Lasereinheit und/oder dem Druckkopf verstellbar sein. Hier wären dann beispielsweise die Elektronenstrahl- und/oder Lasereinheit und/oder der Druckkopf der Sprühdruckeinheit in einer XY-Ebene verstellbar, während die Bauteilplattform entlang einer Z-Achse des XYZ-Koordinatensystems verstellbar ist.

Wie erläutert, ist die vorgeschlagene 3D-Druckvorrichtung eingerichtet, in einem Arbeitsgang ein erstes Material mittels der Sprühdruckeinheit als Metallpulver und ein zweites Material als in flüssiger Form vorliegendes Kunststoffmaterial aufzusprühen und in einem zweiten Arbeitsgang aufgesprühtes erstes Material selektiv und wenigstens lokal aufzuschmelzen.

In einer möglichen Weiterbildung weist die Sprühdruckeinheit einen UV-Licht-Emitter zur Aushärtung aufgesprühten Kunststoffmaterials auf. Mittels der 3D-Druckvorrichtung ist hierbei dann beispielsweise ein 3D-Druckverfahren umsetzbar, bei dem Kunststoffmaterial mittels der Sprühdruckeinheit aufgesprüht wird, vernetzt und mittels dem UV-Licht-Emitter ausgehärtet wird, bevor anschließend in dieses Kunststoffmaterial oder ein anderes kunststoffbasiertes oder metallisches Material, das ebenfalls mittels der Sprühdruckeinheit aufgesprüht wurde, lokal geschmolzen wird, um einen Abschnitt des dreidimensionalen Bauteils zu erzeugen.

Eine Lasereinheit der 3D-Druckvorrichtung kann für selektives Lasersintern (englisch: "selective laser sintering", SLS) und/oder selektives Laserschmelzen (englisch: "selective laser melting", SLM) eingerichtet und vorgesehen sein. Eine Elektronenstrahleinheit kann dementsprechend für ein selektives Elektronenstrahlschmelzen (englisch: "electron beam melting", EBM) eingerichtet und vorgesehen sein.

Ein weiterer Aspekt der erfindungsgemäßen Lösung betrifft ein 3D-Druckverfahren zur Herstellung respektive zum Drucken eines dreidimensionalen Bauteils aus mindestens zwei unterschiedlichen Materialien.

Hierbei ist zur Herstellung des Bauteils vorgesehen, dass
- mittels einer Sprühdruckeinheit wenigstens ein erstes und ein zweites Material für das Bauteil schichtweise aufgesprüht werden und
- mittels einer Elektronenstrahl- und/oder Lasereinheit aufgesprühtes Material durch Schmelzen mittels eines Elektronenstrahl und/oder mittels eines Laserstrahls der Elektronenstrahl- und/oder Lasereinheit stoffschlüssig verbunden wird
in einem Arbeitsgang ein erstes Material mittels der Sprühdruckeinheit als Metallpulver und ein zweites Material als in flüssiger Form vorliegendes Kunststoffmaterial aufgesprüht werden und in einem zweiten Arbeitsgang aufgesprühtes erstes Material selektiv und wenigstens lokal aufgeschmolzen wird.

Ein erfindungsgemäßes 3D-Druckverfahren baut somit auf dem vorstehend bereits dargelegten Grundgedanken der Erfindung auf, ein dreidimensionales Bauteil durch kombiniertes Aufsprühen unterschiedlicher Materialien und selektives Schmelzen gesprühten Materials herzustellen.

In einer Ausführungsvariante wird beispielsweise mittels der Sprühdruckeinheit ein erstes und/oder ein zweites Material aufgesprüht, um eine Stützstruktur für eine Schmelze aufgesprühten Materials zu bilden, die lokal mittels der Elektronenstrahl- und/oder Lasereinheit erzeugt wird. Erstes und/oder zweites aufgesprühtes Material berandet somit einen Bereich, der aus diesem oder einem anderen Material aufgesprüht wurde und der nachfolgend durch die Elektronenstrahl- und/oder Lasereinheit geschmolzen wird. Eine entsprechende Stützstruktur findet somit ein unkontrolliertes Fließen der Schmelze und begrenzt den entsprechenden Bereich.

Um das dreidimensionale Bauteil herzustellen, ist erfindungsgemäß vorgesehen, mittels der Sprühdruckeinheit ein Metallpulver und ein Kunststoffmaterial aufzusprühen und mittels der Elektronenstrahl- und/oder Lasereinheit zumindest einen Teil des aufgesprühten Metallpulvers lokal zu schmelzen. Während der aufgesprühte Kunststoff, beispielsweise ein flüssiges Fotopolymer, eine feste Struktur nach dem Aufsprühen durch Vernetzung bildet, wird mit dem Metallpulver erst durch das Schmelzen eine massive Struktur erzeugt.

In diesem Zusammenhang kann auch vorgesehen sein, dass das aufgesprühte Metallpulver von aufgesprühtem Kunststoffmaterial, insbesondere durch UVlichtgehärtetem Kunststoffmaterial, eingefasst ist, sodass eine mittels der Elektronenstrahl- und/oder Lasereinheit erzeugte Metallschmelze aus dem aufgesprühten Metallpulver durch eine Stützstruktur aus aufgesprühtem Kunststoffmaterial eingefasst ist.

Ein verwendetes Metallpulver kann grundsätzlich einen Zuschlagsstoff für die Erhaltung und/oder Erhöhung der Fließfähigkeit des Metallpulvers enthalten. In einer Variante ist ein Zuschlagsstoff vorgesehen, der sich nach dem Aufsprühen unter den an der Bauteilplattform herrschenden Umgebungsbedingungen verflüchtigt. Der sich verflüchtigende Zuschlagsstoff dient somit der Erhaltung und/oder Erhöhung der Fließfähigkeit des Metallpulvers, hat dann aber keinen Einfluss beim Schmelzen des Metallpulvers mittels der Elektronenstrahl- und/oder Laserstrahleinheit. Alternativ oder ergänzend kann auch ein Zuschlagsstoff vorgesehen sein, der für den Schmelzprozess ohnehin unkritisch ist oder sogar im Hinblick auf gewünschte Werkstoff- und Bauteileigenschaften vorteilhaft ist.

Mittels eines erfindungsgemäßen 3D-Druckverfahren wird beispielsweise ein Stator für einen Elektromotor hergestellt, wobei durch das 3D-Druckverfahren sowohl wenigstens ein Spulenkörper des Stators als auch wenigstens eine Isolationsschicht, vorzugsweise aus einem Kunststoffmaterial, für den Spulenkörper gedruckt werden. Hier würde folglich sowohl der aus einem metallischen Werkstoff hergestellte Spulenkörper als auch eine aus einem Kunststoffmaterial hergestellte Isolationsschicht im 3D-Druckverfahren schichtweise aufgebaut. Hierbei werden beide Komponenten des Stators in einem einzigen Druckvorgang in einer mit wenigstens einer Sprühdruckeinheit und/oder wenigstens einer Elektronenstrahl- und/oder Lasereinheit ausgestatteten 3D-Druckvorrichtung erzeugt werden.

Grundsätzlich ist ein erfindungsgemäßes 3D-Druckverfahren mittels einer erfindungsgemäßen 3D-Druckvorrichtung umsetzbar. Dementsprechend gelten vorstehend und nachstehend in Bezug auf eine 3D-Druckervorrichtung erläuterte Varianten und Merkmale auch für ein 3D-Druckverfahren und umgekehrt.

Hierbei zeigen:
- Figur 1: ein Ausführungsbeispiel einer erfindungsgemäßen 3D-Druckvorrichtung;
- Figur 2: eine vergrößerte Darstellung eines Ausschnitt der 3D-Druckvorrichtung der Figur 1 mit gegenüber der Figur 1 verstelltem Druckkopf;
- Figur 3: ein Ablaufdiagramm für eine Ausführungsvariante eines erfindungsgemäßen 3D-Druckverfahrens.

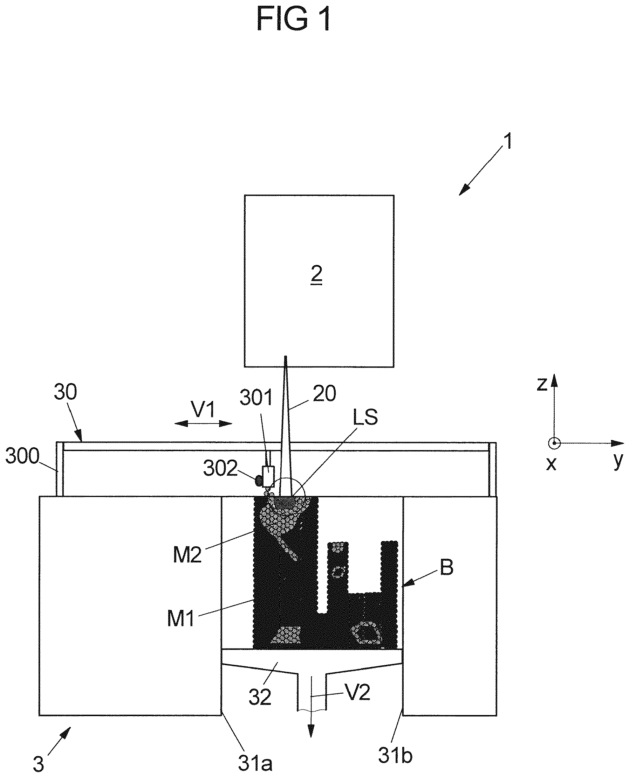

Die Figur 1 zeigt ein Ausführungsbeispiel einer erfindungsgemäßen 3D-Druckvorrichtung 1, bei der eine Sprühdruckeinheit 3 (für ein Inkjet-ähnliches 3D-Druckverfahren) mit einer Elektronenstrahl- und/oder Lasereinheit 2 für ein selektives Elektronenstrahlschmelzen respektive ein selektives Lasersintern oder Laserschmelzen in einer Vorrichtung zum Drucken eines dreidimensionalen Bauteils B zusammengefasst sind. Teil der 3D-Druckvorrichtung 1 ist hierbei eine Bauteilplattform 32, auf der das zu druckende Bauteil B schichtweise mit Hilfe der Elektronenstrahl- und/oder Lasereinheit 2 und der Sprühdruckeinheit 3 aufgebaut wird.

Die Bauteilplattform 32 ist vorliegend innerhalb eines XYZ-Koordinatensystems entlang der Z-Achse verschieblich und zwischen Seitenwänden 31a, 31b angeordnet. Durch Verstellung der Bauteilplattform 32 entlang der Z-Achse in einer Verstellrichtung V2 kann ein Abstand der Bauteilplattform 32 zu einer Elektronenstrahl- und/oder Laserquelle der Elektronenstrahl- und/oder Lasereinheit 2 verändert werden, die oberhalb der Bauteilplattform 32 angeordnet ist. Gleichermaßen lässt sich hierüber ein Abstand entlang der Z-Achse zu einem Druckkopf 301 der Sprühdruckeinheit 3 einstellen, über den unterschiedliche Materialien M1 und M2 zum 3D-Druck des dreidimensionalen Bauteils B aufgesprüht werden.

Der Druckkopf 301 ist Teil einer Druckkopfeinrichtung 30 der Sprühdruckeinheit 3. Diese Druckkopfeinrichtung 30 umfasst unter anderem ein Verstellsystem 300, zum Beispiel mit einem hier nicht dargestellten pneumatischen, hydraulischen oder elektromotorischen Antrieb zur Verstellung des Druckkopfes 301 in der XY-Ebene des XYZ-Koordinatensystems. Über das Verstellsystem 300 ist neben dem Druckkopf 301 auch ein UV-Licht-Emitter 302 verstellbar oberhalb der Bauteilplattform 32 gelagert. Über das Verstellsystem 300 ist somit synchron der UV-Licht-Emitter 302 insbesondere entlang einer Verstellrichtung V1 entlang der Y-Achse und der senkrecht hierzu verlaufenden X-Achse verstellbar. Durch über den Druckkopf 303 aufgesprühtes Material kann eine dreidimensionale Struktur für das herzustellende Bauteil gedruckt werden und gegebenenfalls dieses Material mithilfe des UV-Licht-Emitters 302 ausgehärtet werden. Über den UV-Licht-Emitter 302 kann dabei beispielsweise für das Aushärten respektive das Vernetzen eines mittels des Druckkopfes 301 aufgesprühten Kunststoffmaterials, zum Beispiel eines Fotopolymers, vorgesehen sein.

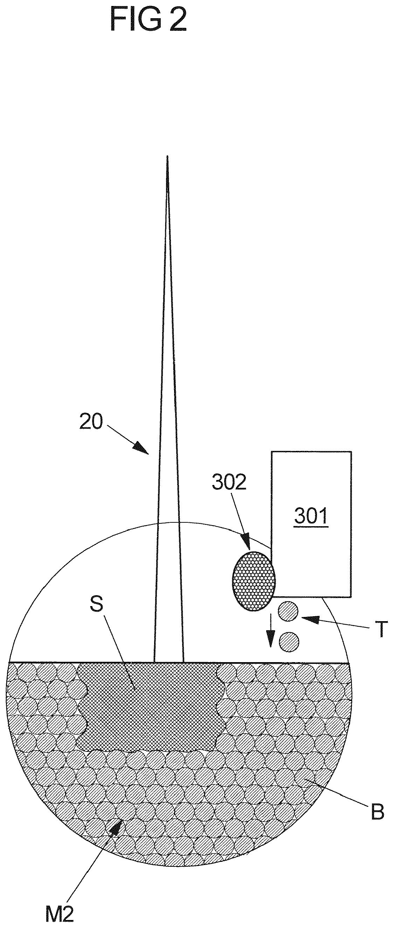

Wie insbesondere auch anhand der vergrößerten Darstellung der Figur 2 veranschaulicht ist, werden bei der 3D-Druckvorrichtung 1 verschiedene 3D-Druckverfahren miteinander kombiniert; neben einem Aufsprühen unterschiedlicher Materialien M1 und M2 nach Art eines Tintenstrahldruckes einerseits, ein selektives Schmelzen oder Sintern mittels eines Elektronen- oder Laserstrahls 20 andererseits.

In den Figuren 1 und 2 ist exemplarisch das Drucken eines Bauteils B aus einem metallischen Material M1 und aus einem kunststoffbasierten Material M2 veranschaulicht. Hierbei werden sowohl pulverförmig vorliegendes Metall (Material M1) als auch flüssig vorliegendes Kunststoffmaterial (Material M2) über den Druckkopf 301 aufgesprüht, um schichtweise die geforderte dreidimensionale Struktur für das herzustellende dreidimensionale Bauteil B auszubilden. Um dabei einen massiven, einstückigen Strukturabschnitt durch das Metall auszubilden, wird aufgesprühtes Metallpulver mittels der Elektronenstrahl- und/oder Lasereinheit 2 selektiv und lokal geschmolzen. Um hierbei ein unkontrolliertes Aus- oder Zerfließen einer mittels eines Elektronen- oder Laserstrahls 20 erzeugten Schmelze S zu verhindern, dient zuvor aufgesprühtes und vorzugsweise bereits ausgehärtetes Kunststoffmaterial 2 als eine die Schmelze S allseitig einfassende Stützstruktur. Dies ist anschaulich anhand der vergrößerten Darstellung der Figur 2 gezeigt.

Mit der 3D-Druckvorrichtung 1 ist damit in einfacher Weise ein dreidimensionales Bauteil B herstellbar, bei dem innerhalb einer Struktur aus Kunststoff eine zusammenhängende einstückige Struktur aus einem Metall eingebettet ist, wobei beide Strukturen vollständig in einem 3D-Druckverfahren erzeugt worden sind, sodass es nahezu keine Beschränkungen hinsichtlich der Komplexität der jeweiligen Struktur gibt. Es ist in diesem Zusammenhang im Übrigen auch selbstverständlich möglich, dass in Tropfen T aufgesprühtes Kunststoffmaterial 2 (ebenfalls) selektiv und lokal zu schmelzen oder ein anderes über den Druckkopf 301 aufgesprühtes Kunststoffmaterial entsprechend zu schmelzen, das nicht selbsttätig und auch nicht unter UV-Licht aushärtet. Mit der dargestellten 3D-Druckvorrichtung kann somit beispielsweise zum einen ein bei UV-Licht aushärtender Kunststoff M2 gedruckt werden und zum anderen, im gleichen Arbeitsgang Metallpulver M1. In einem nachfolgenden Arbeitsgang kann dann innerhalb derselben 3D-Druckvorrichtung 1 mittels der Elektronenstrahl- und/oder Lasereinheit 2 das Metallpulver M1 selektiv und lokal geschmolzen und damit das Pulver zu einem massiven Strukturabschnitt verbunden werden. Das umgebende Kunststoffmaterial M1 dient dabei nicht nur der Isolierung, sondern auch als temporäre Stützstruktur für die entstehendes Schmelze S des geschmolzenen Metallpulvers M1.

Das Metallpulver M1 kann zur Verbesserung und/oder Erhaltung der Fließfähigkeit einen Zuschlagsstoff enthalten, der sich nach dem Aufsprühen verflüchtigt.

In einer möglichen Variante umfasst die Elektronenstrahl- und/oder Lasereinheit 2 eine Elektronenstrahl- und/oder Laserquelle der EOS GmbH, die derzeit für Metalllasersintern (MLS) eingesetzt wird. Eine Druckkopfeinrichtung 30 kann beispielsweise aus einem Objet®-3D-Drucker der Firma Stratasys übernommen sein.

Bei dem zudruckenden dreidimensionalen Bauteil B kann es sich beispielsweise um einen Stator für einen Elektromotor handeln, wobei hierbei sowohl wenigstens ein Spulenkörper des Stators aus Metall als auch wenigstens eine Isolationsschicht aus Kunststoff für den Spulenkörper gedruckt werden.

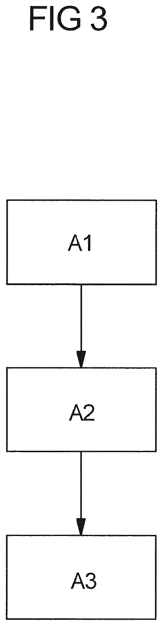

Anhand der Figur 3 ist schematisch noch ein Ablaufdiagramm einer Variante eines mit der 3D-Druckvorrichtung 1 umsetzbaren 3D-Druckverfahrens veranschaulicht. Hierbei ist in einem ersten Verfahrensschritt A1 das Spritzen der unterschiedlichen Materialien M1 und M2, zum Beispiel Metall und Kunststoff, vorgesehen. Nachfolgend erfolgt eine Aushärtung des Kunststoffmaterials, bevor in einem weiteren Verfahrensschritt A3 das aufgesprühte und in Pulverform vorliegende Metall selektiv und lokal geschmolzen wird, um eine einstückige massive Metallstruktur, z.B. in einem "Bett" aus und damit eingefasst in aufgesprühtem Kunststoffmaterial, herzustellen.

### Bezugszeichenliste

- 1: 3D-Druckvorrichtung
- 2: Elektronenstrahl- und/oder Lasereinheit
- 20: Elektronen- oder Laserstrahl
- 3: Sprühdruckeinheit
- V1, V2: Verstellrichtung
- 30: Druckkopfeinrichtung
- 300: Verstellsystem
- 301: Druckkopf
- 302: UV-Licht-Emitter
- 31a, 31b: Seitenwand
- B: Bauteil
- M1, M2: Material
- S: Schmelze
- T: Materialtropfen

## Patentansprüche

1. 3D-Druckvorrichtung zur Herstellung eines dreidimensionalen Bauteils (B) aus mindestens zwei unterschiedlichen Materialien (M1, M2), wobei die 3D-Druckvorrichtung (1) sowohl eine Sprühdruckeinheit (3) als auch eine Elektronstrahl- und/oder Lasereinheit (2) aufweist und, zur Herstellung des dreidimensionalen Bauteils (B), die Sprühdruckeinheit (3) zum Aufsprühen der mindestens zwei unterschiedlichen Materialien (M1, M2) eingerichtet und vorgesehen ist und die Elektronstrahl- und/oder Lasereinheit (2) eingerichtet und vorgesehen ist, aufgesprühtes Material (M1, M2) durch Schmelzen mittels eines Elektronenstrahls und/oder mittels der Laserstrahls (20) der Elektronstrahl- und/oder Lasereinheit (2) stoffschlüssig zu verbinden,
**dadurch gekennzeichnet, dass**
die 3D-Druckvorrichtung (1) eingerichtet ist, in einem Arbeitsgang ein erstes Material (M1) mittels der Sprühdruckeinheit (3) als Metallpulver und ein zweites Material (M2) als in flüssiger Form vorliegendes Kunststoffmaterial aufzusprühen und in einem zweiten Arbeitsgang aufgesprühtes erstes Material (M1) selektiv und wenigstens lokal aufzuschmelzen.

2. 3D-Druckvorrichtung nach Anspruch 1, **dadurch gekennzeichnet, dass** die 3D-Druckvorrichtung (1) eine Bauteilplattform (32) für das herzustellende dreidimensionale Bauteil (B) aufweist, oberhalb derer sowohl die Elektronstrahl- und/oder Lasereinheit (2) als auch ein Druckkopf (301) der Sprühdruckeinheit (3) positionierbar sind.

3. 3D-Druckvorrichtung nach Anspruch 2, **dadurch gekennzeichnet, dass** die Elektronstrahl- und/oder Lasereinheit (2) und/oder der Druckkopf (301) entlang wenigstens zweier im Wesentlichen senkrecht zueinander verlaufender, erster und zweiter Raumrichtungen (x, y) relativ zu der Bauteilplattform (32) verstellbar sind.

4. 3D-Druckvorrichtung nach Anspruch 3, **dadurch gekennzeichnet, dass**
- die Elektronstrahl- und/oder Lasereinheit (2) und/oder der Druckkopf (301) entlang einer dritten Raumrichtung (z), die im Wesentlichen senkrecht zu den ersten und zweiten Raumrichtungen (x, y) verläuft, relativ zu der Bauteilplattform (32) verstellbar sind und/oder
- die Bauteilplattform (32) entlang einer dritten Raumrichtung (z), die im Wesentlichen senkrecht zu den ersten und zweiten Raumrichtungen (x, y) verläuft, relativ zu der Elektronstrahl- und/oder Lasereinheit (2) und/oder dem Druckkopf (302) verstellbar ist.

5. 3D-Druckvorrichtung nach einem der vorhergehenden Ansprüche, **dadurch gekennzeichnet, dass** die Sprühdruckeinheit (3) einen UV-Licht-Emitter (302) zur Aushärtung aufgesprühten Kunststoffmaterials (M2) umfasst.

6. 3D-Druckvorrichtung nach einem der vorhergehenden Ansprüche, **dadurch gekennzeichnet, dass** eine Lasereinheit der 3D-Druckvorrichtung (1) für selektives Lasersintern und/oder selektives Laserschmelzen eingerichtet und vorgesehen ist.

7. 3D-Druckverfahren zur Herstellung eines dreidimensionalen Bauteils (B) aus mindestens zwei unterschiedlichen Materialien (M1, M2), bei dem, zur Herstellung des Bauteils (B),
- mittels einer Sprühdruckeinheit (3) wenigstens ein erstes und ein zweites Material (M1, M2), für das Bauteil (B) schichtweise aufgesprüht werden und
- mittels einer Elektronstrahl- und/oder Lasereinheit (2) aufgesprühtes Material (M1, M2) durch Schmelzen mittels eines Elektronenstrahls und/oder mittels eines Laserstrahls (20) der Elektronstrahl- und/oder Lasereinheit (2) stoffschlüssig verbunden wird,
**dadurch gekennzeichnet, dass**
in einem Arbeitsgang ein erstes Material (M1) mittels der Sprühdruckeinheit (3) als Metallpulver und ein zweites Material (M2) als in flüssiger Form vorliegendes Kunststoffmaterial aufgesprüht werden und in einem zweiten Arbeitsgang aufgesprühtes erstes Material (M1) selektiv und wenigstens lokal aufgeschmolzen wird.

8. 3D-Druckverfahren nach Anspruch 7, **dadurch gekennzeichnet, dass** mittels der Sprühdruckeinheit (3) das zweite Material (M2) aufgesprüht wird, um eine Stützstruktur für eine Schmelze aufgesprühten ersten Materials zu bilden, die lokal mittels der Elektronstrahl- und/oder Lasereinheit (2) erzeugt wird.

9. 3D-Druckverfahren nach Anspruch 8, **dadurch gekennzeichnet, dass** das aufgesprühte Metallpulver (M1) von aufgesprühtem Kunststoffmaterial (M2) eingefasst ist, sodass eine mittels der Elektronstrahl- und/oder Lasereinheit (2) aus aufgesprühten Metallpulver erzeugte Metallschmelze (S) durch eine Stützstruktur aus aufgesprühten Kunststoffmaterial (M2) eingefasst ist.

10. 3D-Druckverfahren nach Anspruch 9, **dadurch gekennzeichnet, dass** das aufgesprühte Kunststoffmaterial (M2) nach dem Aufsprühen durch Vernetzung eine feste Struktur bildet, bevor mit dem Metallpulver erst durch die Metallschmelze (S) eine massive Struktur erzeugt wird.

11. 3D-Druckverfahren nach einem der Ansprüche 7 bis 10, **dadurch gekennzeichnet, dass** das Metallpulver (M1) einen Zuschlagsstoff für die Erhaltung und/oder Erhöhung der Fließfähigkeit des Metallpulvers (M1) enthält.

12. 3D-Druckverfahren nach Anspruch 11, **dadurch gekennzeichnet, dass** sich der Zuschlagsstoff nach dem Aufsprühen verflüchtigt.

13. 3D-Druckverfahren nach einem der Ansprüche 7 bis 12, **dadurch gekennzeichnet, dass** in dem 3D-Druckverfahren ein Stator für einen Elektromotor hergestellt wird, wobei durch das 3D-Druckverfahren sowohl wenigstens ein Spulenkörper des Stators als auch wenigstens eine Isolationsschicht für den Spulenkörper gedruckt werden.

## Claims

1. A 3D printing device for producing a three-dimensional component (B) from at least two different materials (M1, M2), the 3D printing device (1) having both a spray printing unit (3) and an electron beam and/or laser unit (2), and, in order to produce the three-dimensional component (B), the spray printing unit (3) being set up and provided to spray on the at least two different materials (M1, M2), and the electron beam and/or laser unit (2) being set up and provided to connect sprayed-on material (M1, M2) in an integrally joined manner by way of melting by means of an electron beam and/or by means of the laser beam (20) of the electron beam and/or laser unit (2),
**characterized in that**
the 3D printing device (1) is set up to spray on a first material (M1) as metal powder and a second material (M2) as plastic material present in liquid form by means of the spray printing unit (3) in one work process, and to melt sprayed-on first material (M1) selectively and at least locally in a second work process.

2. The 3D printing device as claimed in claim 1, **characterized in that** the 3D printing device (1) has a component platform (32) for the three-dimensional component (B) to be produced, above which component platform (32) both the electron beam and/or laser unit (2) and a print head (301) of the spray printing unit (3) can be positioned.

3. The 3D printing device as claimed in claim 2, **characterized in that** the electron beam and/or laser unit (2) and/or the print head (301) can be moved relative to the component platform (32) along at least two first and second spatial directions (x, y) which run substantially perpendicularly with respect to one another.

4. The 3D printing device as claimed in claim 3, **characterized in that**
- the electron beam and/or laser unit (2) and/or the print head (301) can be moved relative to the component platform (32) along a third spatial direction (z) which runs substantially perpendicularly with respect to the first and second spatial directions (x, y), and/or
- the component platform (32) can be moved relative to the electron beam and/or laser unit (2) and/or the print head (302) along a third spatial direction (z) which runs substantially perpendicularly with respect to the first and second spatial directions (x, y).

5. The 3D printing device as claimed in one of the preceding claims, **characterized in that** the spray printing unit (3) comprises a UV light emitter (302) for curing sprayed-on plastic material (M2).

6. The 3D printing device as claimed in one of the preceding claims, **characterized in that** a laser unit of the 3D printing device (1) is set up and provided for selective laser sintering and/or selective laser melting.

7. A 3D printing method for producing a three-dimensional component (B) from at least two different materials (M1, M2), in the case of which method, in order to produce the component (B),
- at least a first and a second material (M1, M2) are sprayed on layer by layer for the component (B) by means of a spray printing unit (3), and
- sprayed-on material (M1, M2) is connected in an integrally joined manner by means of an electron beam and/or laser unit (2), by way of melting by means of an electron beam and/or by means of a laser beam (20) of the electron beam and/or laser unit (2)
**characterized in that**
in one work process, a first material (M1) is sprayed on by means of the spray printing unit (3) as metal powder and a second material (M2) is sprayed on as plastic material present in liquid form, and in a second work process sprayed-on first material (M1) is melted selectively and at least locally.

8. The 3D printing method as claimed in claim 7, **characterized in that** the second material (M2) is sprayed on by means of the spray printing unit (3), in order to form a supporting structure for a melt of sprayed-on first material, which melt is generated locally by means of the electron beam and/or laser unit (2).

9. The 3D printing method as claimed in claim 8, **characterized in that** the sprayed-on metal powder (M1) is surrounded by sprayed-on plastic material (M2), with the result that a metal melt (S) which is generated from sprayed-on metal powder by means of the electron beam and/or laser unit (2) is surrounded by way of a supporting structure made from sprayed-on plastic material (M2).

10. The 3D printing method as claimed in claim 9, **characterized in that** the sprayed on plastic material (M2) forms a fixed structure as a result of crosslinking after spraying, before a solid structure is produced with the metal powder only by the metal melting (S).

11. The 3D printing method as claimed in one of the claims 7 to 10, **characterized in that** the metal powder (M1) comprises an aggregate for obtaining and/or increasing the flowability of the metal powder (M1).

12. The 3D printing method as claimed in claim 11, **characterized in that** the aggregate evaporates after the spraying-on operation.

13. The 3D printing method as claimed in one of claims 7 to 12, **characterized in that** a stator for an electric motor is produced in the 3D printing method, both at least one coil former of the stator and at least one insulation layer for the coil former being printed by way of the 3D printing method.

## Revendications

1. Dispositif d'impression 3D pour fabriquer une pièce tridimensionnelle (B) à partir d'au moins deux matériaux (M1, M2) différents, dans lequel le dispositif d'impression 3D (1) présente aussi bien une unité d'impression par pulvérisation (3) qu'une unité à faisceau d'électrons et/ou laser (2) et, pour fabriquer la pièce tridimensionnelle (B), l'unité d'impression par pulvérisation (3) est conçue et prévue pour pulvériser les au moins deux matériaux (M1, M2) différents et l'unité à faisceau d'électrons et/ou laser (2) est conçue et prévue pour relier par liaison de matière le matériau (M1, M2) pulvérisé par fusion au moyen d'un faisceau d'électrons et/ou au moyen du faisceau laser (20) de l'unité à faisceau d'électrons et/ou laser (2),
**caractérisé en ce que**
le dispositif d'impression 3D (1) est conçu dans une phase de travail pour pulvériser un premier matériau (M1) au moyen de l'unité d'impression par pulvérisation (3) en tant que poudre métallique et un deuxième matériau (M2) en tant que matière plastique présente sous forme liquide et dans une deuxième phase de travail pour faire fondre le premier matériau (M1) pulvérisé de manière sélective et au moins localement.

2. Dispositif d'impression 3D selon la revendication 1, **caractérisé en ce que** le dispositif d'impression 3D (1) présente une plateforme porte-pièce (32) pour la pièce tridimensionnelle (B) à fabriquer, au-dessus de laquelle aussi bien l'unité à faisceau d'électrons et/ou laser (2) qu'une tête d'impression (301) de l'unité d'impression par pulvérisation (3) peuvent être positionnées.

3. Dispositif d'impression 3D selon la revendication 2, **caractérisé en ce que** l'unité à faisceau d'électrons et/ou laser (2) et/ou la tête d'impression (301) peuvent être déplacées par rapport à la plateforme porte-pièce (32) le long d'au moins deux première et deuxième directions spatiales (x, y) s'étendant sensiblement perpendiculairement l'une à l'autre.

4. Dispositif d'impression 3D selon la revendication 3, **caractérisé en ce que**
- l'unité à faisceau d'électrons et/ou laser (2) et/ou la tête d'impression (301) peuvent être déplacées par rapport à la plateforme porte-pièce (32) le long d'une troisième direction spatiale (z), qui s'étend sensiblement perpendiculairement aux première et deuxième directions spatiales (x, y), et/ou
- la plateforme porte-pièce (32) peut être déplacée par rapport à l'unité à faisceau d'électrons et/ou laser (2) et/ou la tête d'impression (302) le long d'une troisième direction spatiale (z), qui s'étend sensiblement perpendiculairement aux première et deuxième directions spatiales (x, y).

5. Dispositif d'impression 3D selon l'une quelconque des revendications précédentes, **caractérisé en ce que** l'unité d'impression par pulvérisation (3) comprend un émetteur de lumière ultraviolette (302) pour durcir la matière plastique (M2) pulvérisée.

6. Dispositif d'impression 3D selon l'une quelconque des revendications précédentes, **caractérisé en ce qu'**une unité laser du dispositif d'impression 3D (1) est conçue et prévue pour un frittage sélectif par laser et/ou une fusion sélective par laser.

7. Procédé d'impression 3D pour fabriquer une pièce tridimensionnelle (B) à partir d'au moins deux matériaux (M1, M2) différents, selon lequel, pour fabriquer la pièce (B),
- au moins un premier et un deuxième matériau (M1, M2) pour la pièce (B) sont pulvérisés couche par couche au moyen d'une unité d'impression par pulvérisation (3) et
- au moyen d'une unité à faisceau d'électrons et/ou laser (2), le matériau (M1, M2) pulvérisé est relié par liaison de matière par fusion au moyen d'un faisceau d'électrons et/ou au moyen d'un faisceau laser (20) de l'unité à faisceau d'électrons et/ou laser (2),
**caractérisé en ce que**
dans une phase de travail un premier matériau (M1) en tant que poudre métallique et un deuxième matériau (M2) en tant que matière plastique présente sous forme liquide sont pulvérisés au moyen de l'unité d'impression par pulvérisation (3) et dans une deuxième phase de travail le premier matériau (M1) pulvérisé est fondu de manière sélective et au moins localement.

8. Procédé d'impression 3D selon la revendication 7, **caractérisé en ce que** le deuxième matériau (M2) est pulvérisé au moyen de l'unité d'impression par pulvérisation (3), afin de former une structure d'appui pour une masse fondue de premier matériau pulvérisé, qui est produite localement au moyen de l'unité à faisceau d'électrons et/ou laser (2).

9. Procédé d'impression 3D selon la revendication 8, **caractérisé en ce que** la poudre métallique (M1) pulvérisée est entourée par la matière plastique (M2) pulvérisée, de sorte qu'une masse fondue métallique (S) produite à partir de poudre métallique pulvérisée au moyen de l'unité à faisceau d'électrons et/ou laser (2) est entourée par une structure d'appui composée de matière plastique (M2) pulvérisée.

10. Procédé d'impression 3D selon la revendication 9, **caractérisé en ce que** la matière plastique (M2) pulvérisée forme après la pulvérisation par réticulation une structure solide, avant qu'une structure massive ne soit produite avec la poudre métallique d'abord par la masse fondue métallique (S).

11. Procédé d'impression 3D selon l'une quelconque des revendications 7 à 10, **caractérisé en ce que** la poudre métallique (M1) contient un granulat pour la conservation et/ou l'augmentation de la fluidité de la poudre métallique (M1).

12. Procédé d'impression 3D selon la revendication 11, **caractérisé en ce que** le granulat se volatilise après la pulvérisation.

13. Procédé d'impression 3D selon l'une quelconque des revendications 7 à 12, **caractérisé en ce que** dans le procédé d'impression 3D un stator pour un moteur électrique est fabriqué, dans lequel aussi bien au moins un corps de bobine du stator qu'au moins une couche isolante pour le corps de bobine sont imprimés par le procédé d'impression 3D.
